# EUROPEAN PATENT APPLICATION

(11) **EP 4 746 059 A1**
(43) Date of publication of application: **20.05.2026**
(21) Application number: 25214139.5
(22) Date of filing: 07.11.2025
(51) Int. Cl.: H01M 4/13, G06F 30/27, G06N 3/02, G06N 3/045

(54) **METHOD AND SYSTEM FOR DESIGNING ELECTRODE BASED ON ARTIFICIAL INTELLIGENCE**

(30) Priority: 14.11.2024 KR 20240161917
(71) Applicant: SAMSUNG SDI CO., LTD., Yongin-si, Gyeonggi-do 17084 (KR)
(72) Inventor: LEE, Dongah, 17084 Yongin-si (KR); YU, Jeemin, 17084 Yongin-si (KR); LEE, Jaehyoun, 17084 Yongin-si (KR)
(74) Representative: Maiwald GmbH

(57) **Abstract**

An electrode design system based on artificial intelligence includes: an electrode design factor prediction system to predict an electrode design factor, the electrode design factor prediction system including: a model execution unit to execute a first artificial neural network model trained to predict an electrode design factor of a target battery based on a condition of the target battery and random data; a storage unit to store data associated with the first artificial neural network model; and a communication unit to transmit, to an electrode process facility system, the predicted electrode design factor of the target battery. The electrode process facility system is to adjust process equipment based on the predicted electrode design factor.

## Description

### BACKGROUND

### 1. Field

Aspects of embodiments of the present disclosure relate to a method and system for designing an electrode based on artificial intelligence.

### 2. Description of the Related Art

Recently, the demand for energy storage devices, such as secondary batteries, in particular, lithium-ion batteries, has increased sharply. These batteries are used in a variety of applications including electronic devices, electric vehicles, and energy storage systems, and technical advancements aimed at improving performance, lifespan, safety, cost, and efficiency may be desired.

The above information disclosed in this Background section is for enhancement of understanding of the background of the present disclosure, and therefore, it may contain information that does not constitute related (or prior) art.

### SUMMARY

In a comparative battery design and development process, each different model or required specification is developed by a different developer, which may require a large amount of manpower and time in the battery development process. For example, in a new development, there are many cases where the developer may not fully grasp the history of the existing model, so past development data or know-how may not be sufficiently utilized. As a result, development time may be delayed and costs may be increased. Therefore, a technology that supports battery electrode designs in a more efficient and automated manner may be desired.

Embodiments of the present disclosure may be directed to a method and system for designing an electrode based on artificial intelligence.

These and other aspects and features of the present disclosure will be described in or will be apparent from the following description of embodiments of the present disclosure.

According to an aspect of the present disclosure, an electrode design system based on artificial intelligence includes: an electrode design factor prediction system configured to predict an electrode design factor, the electrode design factor prediction system including: a model execution unit configured to execute a first artificial neural network model trained to predict an electrode design factor of a target battery based on a condition of the target battery and random data; a storage unit configured to store data associated with the first artificial neural network model; and a communication unit configured to transmit, to an electrode process facility system, the predicted electrode design factor of the target battery. The electrode process facility system is configured to adjust process equipment based on the predicted electrode design factor.

In an embodiment, the condition of the target battery may include at least one of a thickness or a capacity of the target battery.

In an embodiment, the electrode design factor of the target battery may include at least one of a width, a coating width, a central uncoated portion width, an unused uncoated portion width, or a notching uncoated portion width, of an electrode of the target battery.

In an embodiment, the communication unit may be configured to receive the condition of the target battery and the random data.

In an embodiment, the electrode design system may further include a prediction model provision system configured to provide the first artificial neural network model, the prediction model provision system including a first model training unit and a second model training unit. The second model training unit may be configured to train a second artificial neural network model to calculate a score based on a similarity between first data including a condition of a virtual battery and an electrode design factor of the virtual battery and second data including a condition of an actual battery and an electrode design factor of the actual battery. The first model training unit may be configured to train the first artificial neural network model to predict the electrode design factor of the virtual battery based on the score, the condition of the virtual battery, and the random data.

In an embodiment, the first artificial neural network model and the second artificial neural network model may include artificial neural network models based on CTGAN (Modeling Tabular Data using Conditional GAN).

In an embodiment, the second model training unit may be trained to calculate the score to be higher as the similarity between the first data and the second data is higher.

In an embodiment, the prediction model provision system may further include a communication unit configured to receive a plurality of design data measured by a plurality of equipment of the electrode process facility system.

In an embodiment, the prediction model provision system may further include a communication unit configured to transmit the first artificial neural network model to the electrode design factor prediction system.

According to an aspect of the present disclosure, an electrode design method includes: training a first artificial neural network model to predict an electrode design factor of a virtual battery based on a condition of the virtual battery and random data; predicting the electrode design factor of a target battery based on a condition of the target battery and the random data by using the trained first artificial neural network model; and adjusting process equipment based on the predicted electrode design factor.

In an embodiment, the condition of the target battery may include at least one of a thickness or a capacity of the target battery, and the condition of the virtual battery may include at least one of a thickness or a capacity of the virtual battery.

In an embodiment, the electrode design factor of the target battery may include at least one of a width, a coating width, a central uncoated portion width, an unused uncoated portion width, or a notching uncoated portion width, of an electrode of the target battery, and the electrode design factor of the virtual battery may include at least one of a width, a coating width, a central uncoated portion width, an unused uncoated portion width, or a notching uncoated portion width, of an electrode of the virtual battery.

In an embodiment, the predicting may include receiving the condition of the target battery and the random data.

In an embodiment, the electrode design method may further include, after the predicting, transmitting the predicted electrode design factor of the target battery to an electrode process facility system to adjust the process equipment.

In an embodiment, the training of the first artificial neural network model may include: predicting, by the first artificial neural network model, the electrode design factor of the virtual battery based on the condition of the virtual battery and the random data; calculating, by a second artificial neural network model, a score based on a similarity between first data including the condition of the virtual battery and the electrode design factor of the virtual battery and second data including the condition of an actual battery and the electrode design factor of the actual battery; and training the first artificial neural network model based on the score.

In an embodiment, the first artificial neural network model and the second artificial neural network model may include artificial neural network models based on CTGAN (Modeling Tabular Data using Conditional GAN).

In an embodiment, the electrode design method may further include, before the training of the first artificial neural network model, training the second artificial neural network model to calculate a higher score as the similarity between the first data and the second data is higher.

In an embodiment, the electrode design method may further include, before the training of the second artificial neural network model, obtaining the electrode design factor of the actual battery by: receiving, by using a plurality of equipment of the electrode process facility system, a plurality of design data measured from the actual battery, and preprocessing the plurality of design data.

In an embodiment, the preprocessing may include: excluding an outlier from the plurality of design data; and calculating an average of remaining data of the plurality of design data with the outlier excluded.

In an embodiment, a computer-readable recording medium may store a computer program for executing the method on a computer.

According to some embodiments of the present disclosure, it may be possible to predict, by using an artificial neural network model, an electrode design factor desired for a battery to be manufactured to have a target capacity and/or thickness. When an artificial neural network model is used, it may be possible to reflect the history of an existing model in the electrode design and development process, and to utilize past development data and know-how. Accordingly, an efficient and automated method and system for designing battery electrodes may be provided.

According to some embodiments of the present disclosure, a control-factor prediction system may utilize an artificial neural network model based on CTGAN (Modeling Tabular Data using Conditional GAN). The CTGAN-based artificial neural network model may be trained based on thickness, capacity, and electrode design factor data of an actual battery so as to predict electrode design factors having a high similarity to the actual battery data. Accordingly, it may be possible to accurately predict values of the battery electrode design factors.

According to some embodiments of the present disclosure, the predicted electrode design factor may be transmitted to an electrode process facility system. The electrode process facility system may adjust its process equipment by applying the received predicted value as an electrode design factor. Accordingly, an automated method and system for designing electrodes may be provided, in which the electrode design factor is predicted, and the process equipment is controlled based on such prediction.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 illustrates an example of an electrode design system using artificial intelligence according to an embodiment of the present disclosure.
FIG. 2 is a block diagram illustrating an information processing system used for an electrode design using artificial intelligence according to an embodiment of the present disclosure.
FIG. 3 is a block diagram illustrating an electrode design factor prediction system using artificial intelligence according to an embodiment of the present disclosure.
FIG. 4 is a diagram illustrating a method for executing a first artificial neural network model in a model execution unit according to an embodiment of the present disclosure.
FIG. 5 is a block diagram illustrating a prediction model provision system using artificial intelligence according to an embodiment of the present disclosure.
FIG. 6 is a diagram illustrating a method of training a second artificial neural network model in a second model training unit according to an embodiment of the present disclosure.
FIG. 7 is a diagram illustrating a method of training a first artificial neural network model in a first model training unit according to an embodiment of the present disclosure.
FIG. 8 is a flowchart illustrating a method of training first and second artificial neural network models according to an embodiment of the present disclosure.
FIG. 9 is a flowchart illustrating a method for designing an electrode using artificial intelligence according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

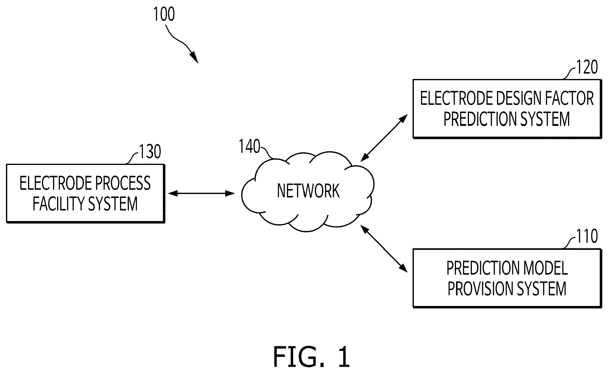

FIG. 1 illustrates an example of an electrode design system 100 using artificial intelligence according to an embodiment of the present disclosure.

Referring to FIG. 1, the electrode design system 100 for a battery may include a prediction model provision system 110, an electrode design factor prediction system 120, and an electrode process facility system 130. The prediction model provision system 110, the electrode design factor prediction system 120, and the electrode process facility system 130 may be connected to one another via a network 140. For example, the network 140 may be a wired network or a wireless network. As another example, the network 140 may be a cloud network infrastructure including computing devices, storage devices, and applications used to predict an electrode design factor and to transmit the predicted electrode design factor to the electrode process facility system 130 that are interconnected with one another, but the present disclosure is not limited thereto.

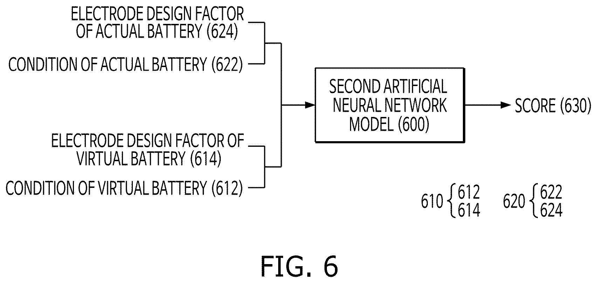

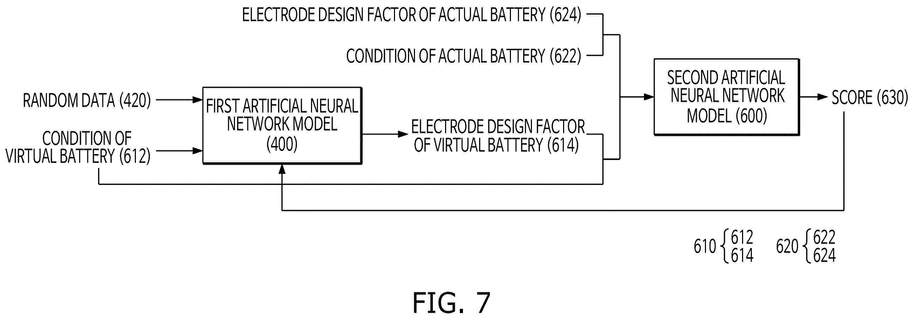

In an embodiment, the prediction model provision system 110 may receive, via the network 140, data used for training a prediction model from the electrode process facility system 130. For example, the prediction model provision system 110 may receive a plurality of design data measured by using a plurality of equipment included in the electrode process facility system 130. The prediction model provision system 110 may preprocess the received plurality of design data to obtain an electrode design factor of an actual battery. In this case, preprocessing may indicate excluding outliers from the plurality of design data, and calculating an average of remaining data of the plurality of design data. Depending on the case, however, the design data may also be used as it is received without a separate preprocessing. The electrode design factor of the actual battery may include at least one of a width, a coating width, a central uncoated portion width, an unused uncoated portion width, or a notching uncoated portion width, of an electrode of the actual battery. However, the present disclosure is not limited thereto. A separate database may store a plurality of design data collected in advance from the electrode process facility system 130, and the prediction model provision system 110 may receive the plurality of design data from the database. Accordingly, based on the electrode design factor of an actual electrode obtained by preprocessing the plurality of design data received by the prediction model provision system 110, it may be possible to train and generate an artificial neural network model that predicts the electrode design factor. A more detailed description of how the artificial neural network model is trained in the prediction model provision system 110 will be provided below with reference to FIGS. 6 and 7.

Different from the example described above with reference to FIG. 1, at least some among the prediction model provision system 110, the electrode design factor prediction system 120, and/or the electrode process facility system 130 may be connected directly to each other for communications without passing through the network 140. For example, the prediction model provision system 110, the electrode design factor prediction system 120, and the electrode process facility system 130 may be integrated together within a system that is locally operated in a particular place or location.

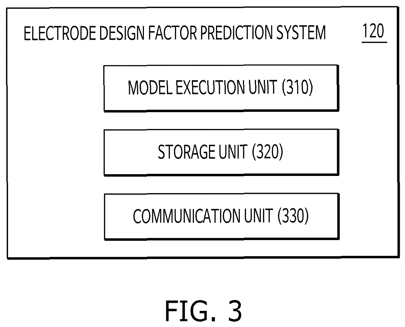

In an embodiment, the electrode design factor prediction system 120 may receive, either via the network 140 or directly, a trained artificial neural network model from the prediction model provision system 110. The model may have been trained to predict the electrode design factor based on artificial intelligence. An artificial neural network model may be based on CTGAN (Modeling Tabular Data using Conditional GAN). The electrode design factor prediction system 120 may transmit the predicted electrode design factor of a target battery to the electrode process facility system 130. For example, the electrode design factor prediction system 120 may transmit the electrode design factor of a target battery, as predicted by the prediction model, to the electrode process facility system 130 via the network 140. A more detailed description of the configuration of the electrode design factor prediction system 120 will be provided below with reference to FIG. 3.

In an embodiment, the electrode process facility system 130 may include equipment used in various suitable processes of manufacturing an electrode of a battery, for example, such as a coater, a press machine, or a stack slitter, but the present disclosure is not limited thereto. By using the plurality of equipment included in the electrode process facility system 130, it may be possible to measure a plurality of design data for the actual battery. For example, it may be possible to measure, by using the plurality of equipment included in the electrode process facility system 130, data corresponding to the width, the coating width, the central uncoated portion width, the unused uncoated portion width, or the notching uncoated portion width, of the electrode of the actual battery. The electrode process facility system 130 may transmit the measured plurality of design data to the prediction model provision system 110. The prediction model provision system 110 may preprocess the plurality of design data received from the electrode process facility system 130 to obtain the electrode design factor of the actual battery. The preprocessing may be performed in the electrode process facility system 130, and the preprocessed electrode design factor may then be transmitted to the prediction model provision system 110, but the present disclosure is not limited thereto.

In an embodiment, the electrode process facility system 130 may receive the electrode design factor predicted by the electrode design factor prediction system 120. The electrode process facility system 130 may adjust its process equipment by applying the received predicted value as an electrode design factor.

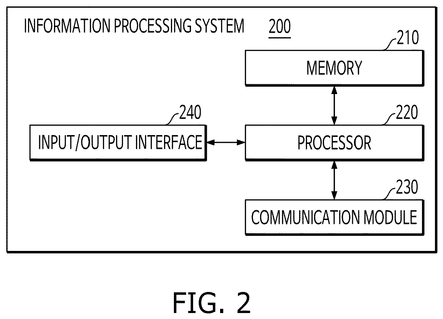

FIG. 2 is a block diagram illustrating an information processing system 200 used for an electrode design using artificial intelligence according to an embodiment of the present disclosure.

Referring to FIG. 2, the information processing system 200 may correspond to at least one of the prediction model provision system 110, the electrode design factor prediction system 120, or the electrode process facility system 130 described above with reference to FIG. 1. The information processing system 200 may include a memory 210, a processor 220, a communication module (e.g., a communication circuit or device) 230, and an input/output interface 240. As shown in FIG. 2, the information processing system 200 may communicate information and/or data through a network by using the communication module 230. According to an embodiment, the information processing system 200 may include at least one device including the memory 210, the processor 220, the communication module 230, and the input/output interface 240.

The memory 210 may include any suitable non-transitory computer-readable recording medium. According to an embodiment, the memory 210 may include a permanent mass storage device, such as a ROM (read only memory), a disk drive, an SSD (solid state drive), or a flash memory. As another example, a permanent mass storage device, such as a ROM, an SSD, a flash memory, or a disk drive, may be a separate, dedicated storage device included in the information processing system 200, and may be distinct from the memory 210. In addition, the memory 210 may store software components including an operating system and at least one program code (e.g., code for generating and training a prediction model, predicting an electrode design factor by using the prediction model, and/or the like, executed by the information processing system 200).

The software components may be loaded from a computer-readable recording medium separate from the memory 210. The separate computer-readable recording medium may be directly connectable to the information processing system 200, and may include, for example, a computer-readable recording medium, such as a floppy drive, a disk, a tape, a DVD/CD-ROM drive, or a memory card. As another example, the software components may be loaded into the memory 210 through the communication module 230, rather than through a computer-readable recording medium. For example, the at least one program may be installed in the memory 210 based on a computer program (e.g., a program for generating and training a prediction model, predicting an electrode design factor using the prediction model, and/or the like) provided by developers or by a file distribution system that distributes application installation files through the communication module 230.

The processor 220 may process commands of a computer program by performing basic arithmetic, logic, and input/output operations. The commands may be provided by the memory 210 or by the communication module 230 to a user terminal or another external system. For example, the processor 220 may generate and train a prediction model based on an electrode design factor of an actual battery, which is obtained by receiving a plurality of design data measured using a plurality of equipment in the electrode process facility system 130, and preprocessing the design data, or may predict an electrode design factor of a target battery by using the trained prediction model.

The communication module 230 may provide a configuration or a functionality for allowing the information processing system 200 to communicate with a user terminal through a network, and may also provide a configuration or a functionality for allowing the information processing system 200 to communicate with an external system (e.g., a separate cloud system and/or the like). For example, control signals, commands, and data provided under the control of the processor 220 of the information processing system 200 may be transmitted to the user terminal and/or the external system via the communication module 230 and the network, and through the communication module of the user terminal and/or external system. For example, a prediction model or predicted electrode design factor generated by the information processing system 200 may be transmitted to the user terminal and/or the external system through the communication module 230 and the network, and through the communication module of the user terminal and/or external system.

In addition, the input/output interface 240 of the information processing system 200 may be an interface for interfacing with a device for inputs or outputs, which may be connected to or included in the information processing system 200. In FIG. 2, the input/output interface 240 is illustrated as an element separate from the processor 220, but the present disclosure is not limited thereto, and the input/output interface 240 may be included in the processor 220. The information processing system 200 may include more components than those shown in FIG. 2.

The processor 220 of the information processing system 200 may manage, process, and/or store information and/or data received from a plurality of user terminals and/or a plurality of external systems. According to an embodiment, the processor 220 may receive from a user terminal and/or an external system the condition of a target battery, random data, and so on.

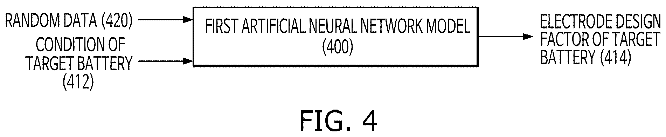

FIG. 3 is a block diagram illustrating the electrode design factor prediction system 120 using artificial intelligence according to an embodiment of the present disclosure. FIG. 4 is a diagram illustrating a method for executing a first artificial neural network model 400 in a model execution unit 310 according to an embodiment of the present disclosure.

Referring to FIGS. 3 and 4, the electrode design factor prediction system 120 may include a model execution unit (e.g., a model execution circuit or device) 310, a storage unit (e.g., a storage circuit or device) 320, and a communication unit (e.g., a communication circuit or device) 330.

In an embodiment, the model execution unit 310 may execute the first artificial neural network model 400, which has been trained to predict an electrode design factor. For example, as shown in FIG. 4, the model execution unit 310 may execute the first artificial neural network model 400 (e.g., trained by the prediction model provision system 110), so as to predict the electrode design factor 414 of a target battery based on a condition 412 of the target battery and random data 420.

In an embodiment, the storage unit 320 may store information associated with the electrode design factor 414 of the target battery predicted by the first artificial neural network model 400, which is executed in the model execution unit 310, based on the random data 420 and the condition 412 of the target battery.

In an embodiment, the communication unit 330 may receive the first artificial neural network model 400 trained to predict the electrode design factor 414 of the target battery from the prediction model provision system 110. In addition, the communication unit 330 may receive random data 420 and the condition 412 of the target battery for predicting the electrode design factor 414 of the target battery. The condition 412 of the target battery may include at least one of a thickness or a capacity of the target battery, and the electrode design factor 414 of the target battery may include at least one of a width, a coating width, a central uncoated portion width, an unused uncoated portion width, or a notching uncoated portion width, of an electrode of the target battery.

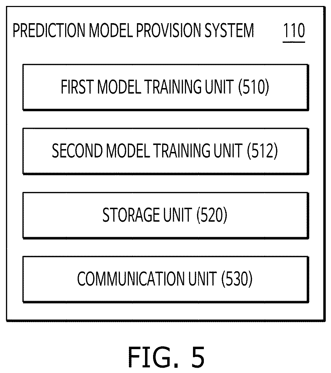

FIG. 5 is a block diagram illustrating the prediction model provision system 110 using artificial intelligence according to an embodiment of the present disclosure. FIG. 6 is a diagram illustrating a method of training a second artificial neural network model 600 in a second model training unit 512 according to an embodiment of the present disclosure. FIG. 7 is a diagram illustrating a method of training the first artificial neural network model 400 in a first model training unit 510 according to an embodiment of the present disclosure.

Referring to FIG. 5, the prediction model provision system 110 may include a first model training unit (e.g., a first model training circuit or device) 510, a second model training unit (e.g., a second model training circuit or device) 512, a storage unit (e.g., a storage circuit or device) 520, and a communication unit (e.g., a communication circuit or device) 530.

Referring to FIGS. 5 and 6, the second model training unit 512 may train the second artificial neural network model 600 so that the second artificial neural network model 600 calculates a score 630 based on a similarity between first data 610, which includes a condition 612 of a virtual battery and an electrode design factor 614 of the virtual battery, and second data 620, which includes a condition 622 of an actual battery and an electrode design factor 624 of the actual battery. For example, the second model training unit 512 may train the second artificial neural network model 600 so that a higher similarity between the first data 610 and the second data 620 produces a higher score 630.

In an embodiment, the condition 612 of the virtual battery may include at least one of the thickness or the capacity of the virtual battery, and the electrode design factor 614 of the virtual battery may include at least one of a width, a coating width, a central uncoated portion width, an unused uncoated portion width, or a notching uncoated portion width, of an electrode of the virtual battery. In addition, the condition 622 of the actual battery may include at least one of the thickness or the capacity of the actual battery, and the electrode design factor 624 of the actual battery may include at least one of a width, a coating width, a central uncoated portion width, an unused uncoated portion width, or a notching uncoated portion width, of an electrode of the actual battery.

Referring to FIGS. 5 and 7, the first model training unit 510 may train the first artificial neural network model 400 to predict the electrode design factor 614 of the virtual battery based on the condition 612 of the virtual battery and random data 420. The second artificial neural network model 600 may be trained to calculate the score 630 based on the similarity between the first data 610 (which includes the condition 612 of the virtual battery and the electrode design factor 614 of the virtual battery) and the second data 620 (which includes the condition 622 of the actual battery and the electrode design factor 624 of the actual battery), and may provide the calculated score 630 as feedback to the first artificial neural network model 400. In an embodiment, the first model training unit 510 may train the first artificial neural network model 400 to predict the electrode design factor 614 of the virtual battery in a direction that increases the score 630 generated by the second artificial neural network model 600. The second artificial neural network model 600 may be a model trained in the second model training unit 512, so that a higher similarity between the first data 610 and the second data 620 results in a higher score 630.

In an embodiment, the storage unit 520 may store information associated with the prediction models trained by the first model training unit 510 and the second model training unit 512. For example, the storage unit 520 may store information associated with the first artificial neural network model 400 and the second artificial neural network model 600 trained by the first model training unit 510 and the second model training unit 512, respectively.

In an embodiment, the prediction model provision system 110 may receive, through the communication unit 340, the data used for training the first and second artificial neural network models 400 and 600 by the first and second model training units 510 and 512 of the prediction model provision system 110. For example, the communication unit 340 may receive a plurality of design data measured by using a plurality of equipment included in the electrode process facility system 130. The storage unit 520 may store information associated with the plurality of design data. The prediction model provision system 110 may preprocess the plurality of design data that is received. For example, the prediction model provision system 110 may exclude outliers from the plurality of design data, and may calculate an average of remaining data of the plurality of design data to obtain the electrode design factor 624 of the actual battery.

In an embodiment, the prediction model provision system 110 may be connected to the electrode design factor prediction system 120 via the communication unit 340. For example, the prediction model provision system 110 may transmit the first artificial neural network model 400, trained by the first model training unit 510, to the electrode design factor prediction system 120 through the communication unit 340.

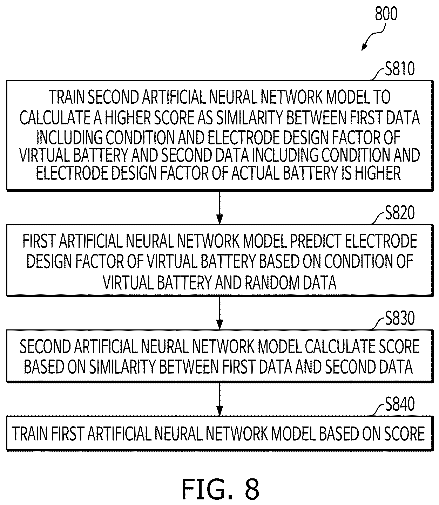

FIG. 8 is a flowchart illustrating a method 800 of training the first and second artificial neural network models according to an embodiment of the present disclosure.

Referring to FIG. 8, in an embodiment, the method 800 of training the first and second artificial neural network models may be performed by at least one processor of an information processing system (e.g., the prediction model provision system).

In method 800 of training the first and second artificial neural network models, the second artificial neural network model may be trained S810 to calculate a higher score as a similarity between first data including a condition and an electrode design factor of a virtual battery and second data including a condition and an electrode design factor of an actual battery is higher.

The method 800 may further include, before the training of the second artificial neural network model, obtaining the electrode design factor of the actual battery, in which the obtaining may include receiving, by using the plurality of equipment included in the electrode process facility system, a plurality of design data measured from the actual battery, and preprocessing the plurality of design data. The preprocessing may include excluding outliers from the plurality of design data, and calculating an average of the remaining data.

Thereafter, the first artificial neural network model may predict S820 the electrode design factor of the virtual battery based on the condition of the virtual battery and random data. The condition of the virtual battery may include at least one of a thickness or a capacity of the virtual battery, and the electrode design factor of the virtual battery may include at least one of a width, a coating width, a central uncoated portion width, an unused uncoated portion width, or a notching uncoated portion width, of an electrode of the virtual battery. The first and second artificial neural network models may be artificial neural network models based on CTGAN (Modeling Tabular Data using Conditional GAN).

Then, the second artificial neural network model may calculate S830 a score based on a similarity between the first data and the second data. The score may be calculated to be higher as the similarity between the first data and the second data is higher.

Then, the first artificial neural network model may be trained S840 based on the score. For example, the first artificial neural network model may be trained so that the electrode design factor of the virtual battery is predicted in a direction that increases the score calculated by the second artificial neural network model.

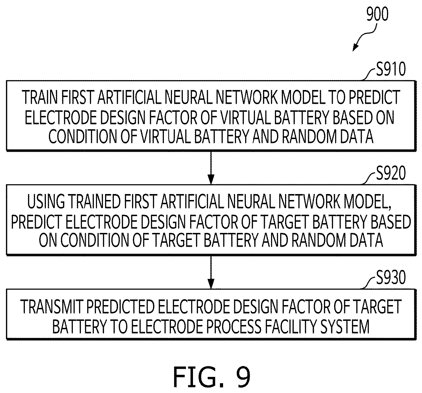

FIG. 9 is a flowchart illustrating a method 900 for designing an electrode using artificial intelligence according to an embodiment of the present disclosure.

Referring to FIG. 9, in an embodiment, the electrode design method may be performed by at least one processor of an information processing system (e.g., the electrode design factor prediction system).

The electrode design method may begin with training S910 a first artificial neural network model to predict the electrode design factor of a virtual battery based on the condition of the virtual battery and random data. The training of the first artificial neural network model may include predicting, by the first artificial neural network model, the electrode design factor of the virtual battery based on the condition of the virtual battery and random data, calculating, by the second artificial neural network model, a score based on a similarity between first data including the condition and electrode design factor of the virtual battery and second data including the condition and electrode design factor of the actual battery, and training the first artificial neural network model based on the score. The condition of the virtual battery and the actual battery may include at least one of a thickness or a capacity of the virtual battery and the actual battery, and the electrode design factor of the virtual battery and the actual battery may include at least one of a width, a coating width, a central uncoated portion width, an unused uncoated portion width, or a notching uncoated portion width, of an electrode.

Thereafter, using the trained first artificial neural network model, the electrode design factor of the target battery may be predicted S920 based on the condition of the target battery and random data. The predicting may further include receiving the condition of the target battery and the random data. The condition of the target battery may include at least one of the thickness or the capacity of the target battery, and the electrode design factor of the target battery may include at least one of a width, a coating width, a central uncoated portion width, an unused uncoated portion width, or a notching uncoated portion width, of an electrode of the target battery.

Next, the predicted electrode design factor of the target battery may be transmitted S930 to the electrode process facility system. The electrode process facility system may adjust its process equipment by applying the received predicted value as the electrode design factor.

The above-described methods may be provided in the form of a computer program stored on a computer-readable recording medium to be executed by a computer. The medium may be a storage medium for continuously storing a computer-executable program, or for temporarily storing the program for execution or download. Further, the medium may be any suitable recording or storage medium in the form of one or more combined hardware units, and is not limited to a medium directly connected to any computer system but may exist in distributed form over a network. Examples of such media may include magnetic media, such as hard disks, floppy disks, or magnetic tapes, optical recording media, such as CD-ROMs or DVDs, magneto-optical media, such as floptical disks, and ROM, RAM, flash memory, and/or the like, which may store program instructions. Another example of the medium may be a recording medium or a storage medium managed by an app store that distributes an application, or by a site or a server that supplies or distributes various software.

The methods, operations, techniques, or electronic devices (e.g., the model execution unit, the first model training unit, the second model training unit, and the like) of the present disclosure described above may be implemented in various suitable ways. For example, these techniques and devices may be implemented by hardware, firmware, software, or a combination thereof. It will be understood by those having ordinary skill in the art that various illustrative logical blocks, modules, circuits, and algorithm processes described in connection with the present disclosure may be implemented using electronic hardware, computer software, or combinations thereof. To illustrate this interchangeability of hardware and software, various illustrative components, blocks, modules, circuits, and processes have been described above in terms of their functionality. Whether such functionality is implemented as hardware or as software depends on design constraints imposed on a particular application and overall system. Those skilled in the art may implement the described functionality in various suitable ways for each particular application.

In a hardware implementation, processing units used to perform the techniques may be implemented within one or more ASICs, DSPs, digital signal processing devices (DSPDs), programmable logic devices (PLDs), field-programmable gate arrays (FPGAs), processors, controllers, microcontrollers, microprocessors, electronic devices, or other electronic units or devices designed to perform the functions described in the present disclosure, or a combination thereof.

Accordingly, various illustrative logical blocks, modules, and circuits described in connection with the present disclosure may be implemented or performed in a general-purpose processor, a DSP, an ASIC, an FPGA or other programmable logic device, discrete gate or transistor logic, discrete hardware components, or any suitable combination thereof that is designed to perform the functions described herein. A general-purpose processor may be a microprocessor, but as another example, the processor may be any suitable processor, controller, microcontroller, or state machine. The processor may also be implemented as a combination of computing devices, for example, such as a DSP and a microprocessor, multiple microprocessors, one or more microprocessors in conjunction with a DSP core, or any other suitable configuration.

In firmware and/or software implementations, the techniques and devices may be implemented as instructions stored on a computer-readable medium, such as RAM, ROM, non-volatile RAM, PROM, EPROM, EEPROM, flash memory, a compact disc (CD), a magnetic or optical data storage device, and/or the like. The instructions may be executed by one or more processors, and may cause the processor(s) to perform certain aspects of the functions described in the present disclosure.

When implemented in software, the techniques may be stored or transmitted as instructions or code on a computer-readable medium. A computer-readable medium may include both computer storage media and communication media, including any suitable medium that facilitates transfer of a computer program from one place to another. Storage media may be any suitable media accessible by a computer. Examples of such computer-readable media, without being limited thereto, include RAM, ROM, EEPROM, CD-ROM, or other optical disk storage, magnetic disk storage or other magnetic storage devices, or any other suitable medium used to store or transmit desired program code in the form of instructions or data structures and that may be accessed by a computer. Also, any suitable connection may be properly termed a computer-readable medium.

For example, if software is transferred from a website, server, or other remote source using a coaxial cable, an optical fiber cable, a twisted pair, a digital subscriber line (DSL), or wireless technologies, such as infrared, radio, or microwave, then the coaxial cable, the optical fiber cable, the twisted pair, the DSL, or the wireless technologies, such as infrared, radio, or microwave, may be included in the definition of a medium. Disks and discs, as used herein, include compact discs (CD), laser discs, optical discs, digital versatile discs (DVD), floppy disks, and/or Blu-ray discs, where disks typically reproduce data magnetically, while discs reproduce data optically using a laser. Combinations of the above may also be included within the scope of computer-readable media.

A software module may reside in, for example, RAM memory, flash memory, ROM memory, EPROM memory, EEPROM memory, registers, a hard disk, a removable disk, a CD-ROM, or any other suitable form of storage medium. An illustrative storage medium may be connected to a processor in such a way that the processor may read information from or write information to the storage medium. As another example, the storage medium may be integrated into the processor. The processor and the storage medium may reside in an ASIC, which may reside in a user terminal. As another example, the processor and the storage medium may reside as separate components from each other in a user terminal.

Although some the embodiments described above may be implemented using one or more standalone computer systems to implement aspects of the subject matter disclosed herein, the present disclosure is not limited thereto, and the embodiments may be implemented in conjunction with any suitable computing environment, such as a network or distributed computing environment. Furthermore, the aspects and features of the subject matter disclosed herein may be implemented in multiple processing chips or devices, and storage may likewise be effected across multiple devices. Such devices may include personal computers, network servers, and handheld devices.

## Claims

1. An electrode design system (100) based on artificial intelligence, comprising:
an electrode design factor prediction system (120) configured to predict an electrode design factor,
wherein the electrode design factor prediction system (120) comprises:
a model execution unit (310) configured to execute a first artificial neural network model (400) trained to predict an electrode design factor of a target battery (414) based on a condition of the target battery (412) and random data (420);
a storage unit (320) configured to store data associated with the first artificial neural network model (400); and
a communication unit (330) configured to transmit, to an electrode process facility system (130), the predicted electrode design factor of the target battery (414),
wherein the electrode process facility system (130) is configured to adjust process equipment based on the predicted electrode design factor (414).

2. The electrode design system (100) according to claim 1, wherein the condition of the target battery (412) comprises at least one of a thickness or a capacity of the target battery.

3. The electrode design system (100) according to claim 1 or 2, wherein the electrode design factor of the target battery (414) comprises at least one of a width, a coating width, a central uncoated portion width, an unused uncoated portion width, or a notching uncoated portion width, of an electrode of the target battery.

4. The electrode design system (100) according to any one of the preceding claims, wherein the communication unit (330) is configured to receive the condition of the target battery (412) and the random data (420).

5. The electrode design system (100) according to any one of the preceding claims, further comprising a prediction model provision system (110) configured to provide the first artificial neural network model (400), the prediction model provision system (110) comprising a first model training unit (510) and a second model training unit (512),
wherein the second model training unit (512) is configured to train a second artificial neural network model (600) to calculate a score (630) based on a similarity between first data (610) comprising a condition of a virtual battery (612) and an electrode design factor of the virtual battery (614) and second data (620) comprising a condition of an actual battery (622) and an electrode design factor of the actual battery (624), and
wherein the first model training unit (510) is configured to train the first artificial neural network model (400) to predict the electrode design factor of the virtual battery (614) based on the score (630), the condition of the virtual battery (612), and the random data (420).

6. The electrode design system (100) according to claim 5, wherein the first artificial neural network model (400) and the second artificial neural network model (600) comprise artificial neural network models based on CTGAN, Modeling Tabular Data using Conditional GAN.

7. The electrode design system (100) according to claim 5 or 6, wherein the second model training unit (512) is trained to calculate the score (630) to be higher as the similarity between the first data (610) and the second data (620) is higher.

8. The electrode design system (100) according to any one of the claims 5 to 7, wherein the prediction model provision system (110) further comprises a communication unit (530) configured to receive a plurality of design data measured by a plurality of equipment of the electrode process facility system (130).

9. The electrode design system (100) according to any one of the claims 5 to 8, wherein the prediction model provision system (110) further comprises a communication unit (530) configured to transmit the first artificial neural network model (400) to the electrode design factor prediction system (120).

10. An electrode design method comprising:
training a first artificial neural network model (400) to predict an electrode design factor of a virtual battery (614) based on a condition of the virtual battery (612) and random data (420);
predicting the electrode design factor of a target battery (414) based on a condition of the target battery (412) and the random data (420) by using the trained first artificial neural network model (400); and
adjusting process equipment based on the predicted electrode design factor (414).

11. The electrode design method according to claim 10, wherein the condition of the target battery (412) comprises at least one of a thickness or a capacity of the target battery, and
wherein the condition of the virtual battery (612) comprises at least one of a thickness or a capacity of the virtual battery.

12. The electrode design method according to claim 10 or 11, wherein the electrode design factor of the target battery (414) comprises at least one of a width, a coating width, a central uncoated portion width, an unused uncoated portion width, or a notching uncoated portion width, of an electrode of the target battery, and
wherein the electrode design factor of the virtual battery (614) comprises at least one of a width, a coating width, a central uncoated portion width, an unused uncoated portion width, or a notching uncoated portion width, of an electrode of the virtual battery.

13. The electrode design method according to any one of the claims 10 to 12, wherein the predicting comprises receiving the condition of the target battery (412) and the random data (420).

14. The electrode design method according to any one of the claims 10 to 13, further comprising, after the predicting, transmitting the predicted electrode design factor of the target battery (414) to an electrode process facility system (130) to adjust the process equipment.

15. A computer-readable recording medium storing a computer program for executing the method according to any one of the claims 10 to 14on a computer.
